Europäisches Patentamt

European Patent Office

Office européen des brevets

(11) Publication number: **0 236 499**
A1

## EUROPEAN PATENT APPLICATION

published in accordance with Art. 158(3) EPC

(21) Application number: 85904665.8

(22) Date of filing: 11.09.85

Data of the international application taken as a basis:

(86) International application number:
PCT/JP85/00505

(87) International publication number:
WO87/01647 (26.03.87 87/07)

(51) Int. Cl.³: **B 26 F 1/44**

(43) Date of publication of application:
16.09.87 Bulletin 87/38

(84) Designated Contracting States:
DE FR GB NL SE

(71) Applicant: MITSUBISHI JUKOGYO KABUSHIKI KAISHA
5-1, Marunouchi 2-chome Chiyoda-ku
Tokyo 100(JP)

(72) Inventor: YANO, Tadashi Mihara Machinary Works
Mitsubishi Jukogyo K.K. 5007, Itozaki-cho
Mihara-City Hiroshimma Pref. 729-03(JP)

(72) Inventor: BABA, Yasuyuki Mihara Machinary Works
Mitsubishi Jukogyo K.K. 5007, Itozaki-cho
Mihara-City Hiroshiima Pref. 729-03(JP)

(74) Representative: Meissner, Peter E., Dipl.-Ing. et al,
Patentanwälte Dipl.-Ing. Peter E. Meissner Dipl.-Ing.
Hans-Joachim Presting Herbertstrasse 22
D-1000 Berlin 33(DE)

(54) DIE INTERCHANGING DEVICE FOR ROTARY DIE CUTTERS.

(57) A rotary die interchanging device for rotary die cutters. A fixed frame unit of a rotary die cutter is divided into two, i.e., fixed frames (36), (37) and a movable frame (24). A die cutting cylinder (2) is set on the movable frame (24) so as to be unitarily combined therewith. This die cutting unit is provided so that it can be moved in the axial direction of the die cutting cylinder (2) for carrying out the interchanging of a die (4). A die (4) to be used for executing a subsequent order is attached to another die cutting cylinder (2) which is provided on a movable frame (25) which is other than the movable frame (24) on which the previously-mentioned die cutting cylinder (2) is set. These plural movable frames (24), (25) and die cutting cylinders (2) are used in an interchanging manner to enable changed orders to be executed safely in a short period of time.

FIG.3

SPECIFICATION

TITLE OF THE INVENTION

Rotary Die Cutter

TECHNICAL FIELD

The present invention relates to a rotary die cutter usable for a corrugated cardboard box making machine.

BACKGROUND TECHNOLOGY

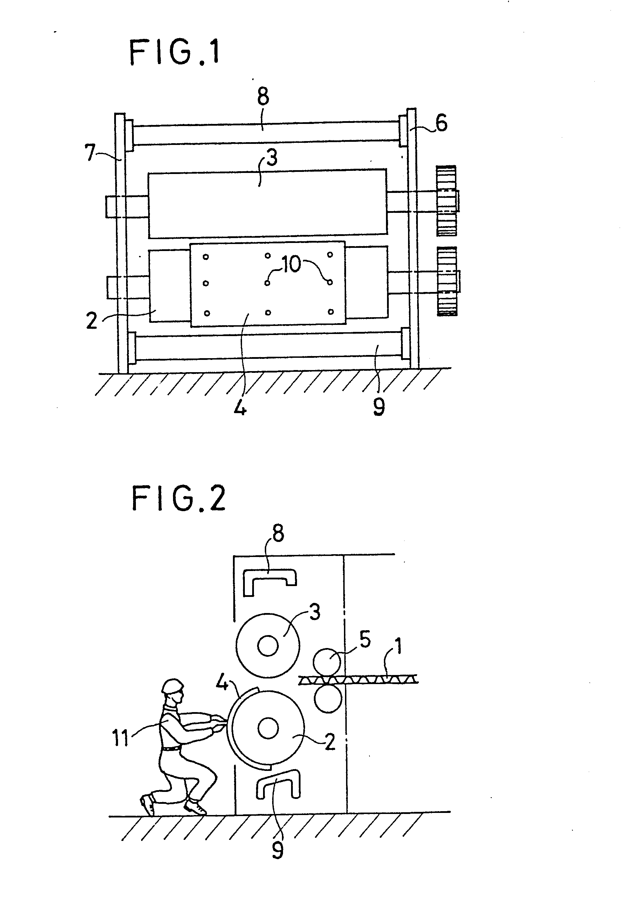

Figs. 1 and 2 schematically illustrate structure of a conventional rotary die cutter incorporated in a corrugated cardboard box making machine and moreover they do how the existent die mounted on a die cut cylinder is replaced with another one.

The rotary die cutter is used for two purposes, one of them being to punch a sheet of corrugated cardboard 1 in such a shape that a corrugated cardboard box is made therewith, the corrugated cardboard 1 being subjected to printing in a printing machine in the preceding process, and the other one being to impress a folding line along which the corrugated cardboard is to be bent. Specifically, the rotary die cutter includes a frame 6 (on the driving side), a frame 7 (on the driven side), an upper stay 8 and a lower stay 9. A die cut cylinder 2 on which a die 4 is fixedly mounted, an anvil cylinder 3 about which cushioning material made of elastomeric material (for instance, urethane rubber or the like) is wound for the purpose of facilitating cutting operation of the corrugated cardboard and minimizing wearing of the cutting edge of the die 4, a pair of feed rolls 5 and others are accommodated in the interior of the frame structure which is constituted by the above-mentioned components.

The die 4 is so constructed that a cutting knife (for cutting operation), a creaser knife (for impressing a scribing line (folding line)) or the like tool is fixedly secured to a curved plate made of plywood or the like and having a predetermined thickness. As will be best seen in Fig. 1, the die 4 is immovably mounted on the die cut cylinder 2 with the aid of a plurality of bolts 10 and it is used for the purpose of cutting, punching, impressing or the like operation while the corrugated cardboard sheet 1 is clamped between the die 4 and the anvil cylinder 3 adapted to be rotated in the opposite direction relative to the die 4. Due to the fact that the die cut cylinder 2 is accommodated in the interior of the frame structure, replacement of the die 4 is carried out by way of the steps of allowing an operator 11 to enter into the interior of the machine after completion of production, dismounting the existing die 4 and then mounting a new die 4.

However, the rotary die cutter as shown in Figs. --

1 and 2 has a drawback that production is interrupted during dismounting of the die 4 and mounting of a new die because an operator is required to work in the interior of the cutter, resulting in long time being consumed for order change. Another drawbacks of the conventional rotary die cutter are that long time is required for replacement of the die 4 comprising dismounting of the die 4 and mounting of a new die due to a narrow clearance between the anvil cylinder 3 and the die cut cylinder 2 and replacement operation is dangerous because an operator's hand tends to be caught in the clearance therebetween during dismounting of the die 4 and mounting of a new die while rotating the die cut cylinder. It should be emphasized that replacement operation is highly dangerous because an operator should work in the interior of the machine.

As mentioned above, the conventional rotary die cutter has many drawbacks that long time is required for replacement of the die 4, no production is carried out during replacement operation due to a necessity for interrupting rotation of the rotary die cutter, resulting in increased time loss, and replacement operation is very dangerous.

Hence, the present invention has been made with the foregoing background in mind and its object resides in providing a rotary die cutter which is entirely free from the drawbacks inherent to the conventional rotary die

- 3 -

cutter and assures high operational performance in respect of quick order change, increased productivity with time loss being minimized, good workability without any work in the interior of the machine being required and high safety in operation.

## DISCLOSURE OF THE INVENTION

There is disclosed according to the present invention a rotary die cutter which is so constructed that it includes a frame structure which is divided into two parts, one of them being a stationary frame and the other one being a movable frame, and a replacement unit is constituted by a combination of the movable frames and a die cut cylinder, the replacement unit being displaceable outwardly of the rotary die cutter when die replacement is to be effected. The rotary die cutter is provided with another replacement unit which is normally disposed outside the frame structure and of which structure is same as the first-mentioned replacement unit except that a different die is previously mounted on the die cut cylinder to be ready for next order. On completion of production with the use of the first-mentioned replacement unit, it is displaced out of the frame structure and the last-mentioned replacement unit is then introduced into the interior of the frame structure so that required production is carried

- 4 -

out alternately in accordance with a predetermined order change. Thus, time required for order change can be reduced remarkably and moreover high safety is assured.

BRIEF DESCRIPTION OF THE DRAWINGS

Fig. 1 is a front view of a conventional rotary die cutter.

Fig. 2 is a sectional side view of the conventional rotary die cutter in Fig. 1.

Fig. 3 is a system diagram illustrating a rotary die cutter in accordance with an embodiment of the present invention.

Fig. 4 is a front view of the rotary die cutter in Fig. 3, and

Fig, 5 is a sectional side view of the rotary die cutter in Fig, 3.

BEST MODE FOR PRACTICING THE INVENTION

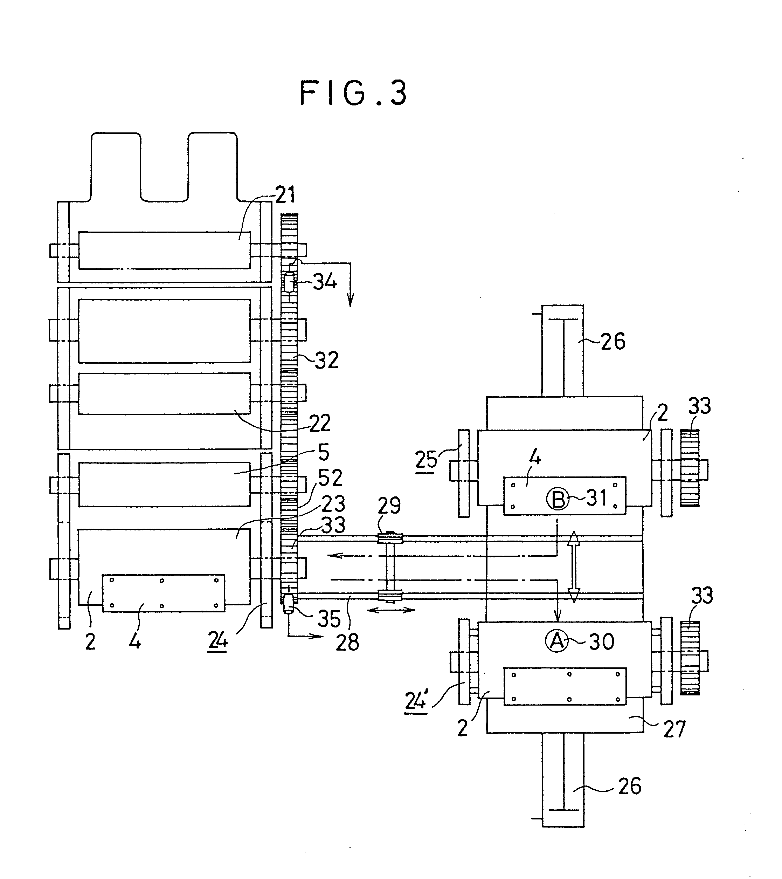

Now, the present invention will be described in a greater detail hereunder with reference to Figs. 3 to 5.

First, refering to Fig. 3, the illustrated production line includes a paper feeder 21, a printing machine 22, a rotary die cutter 23 and a pair of first movable frames 24 as main components.

The first movable frames 24 are provided separately from stationary frames 36 and 37 to serve as support frames for a die cut cylinder 2. In the illustrated embodiment the rotary die cutter includes two sets of movable frames, that is, first movable frames 24 and second movable frame 25 which are designed in the same manner as the first ones. While the first movable frame 24 are held in the operative state, a die 4 to be used for next order is previously mounted on the second movable frames 25.

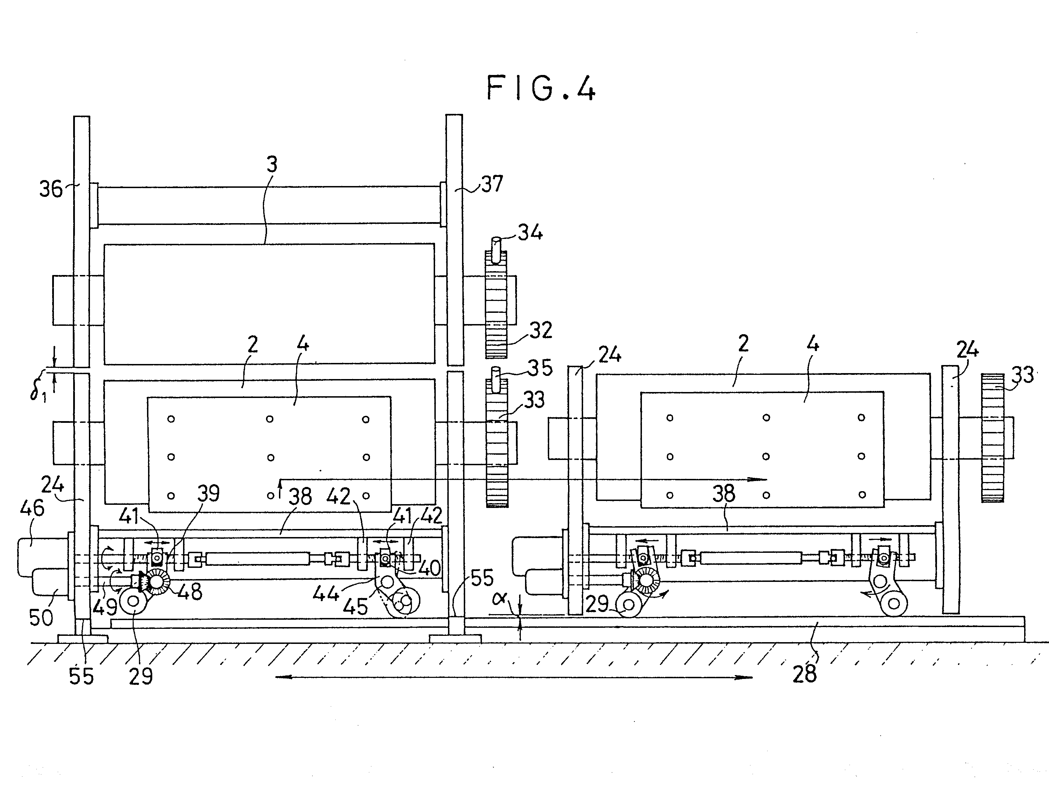

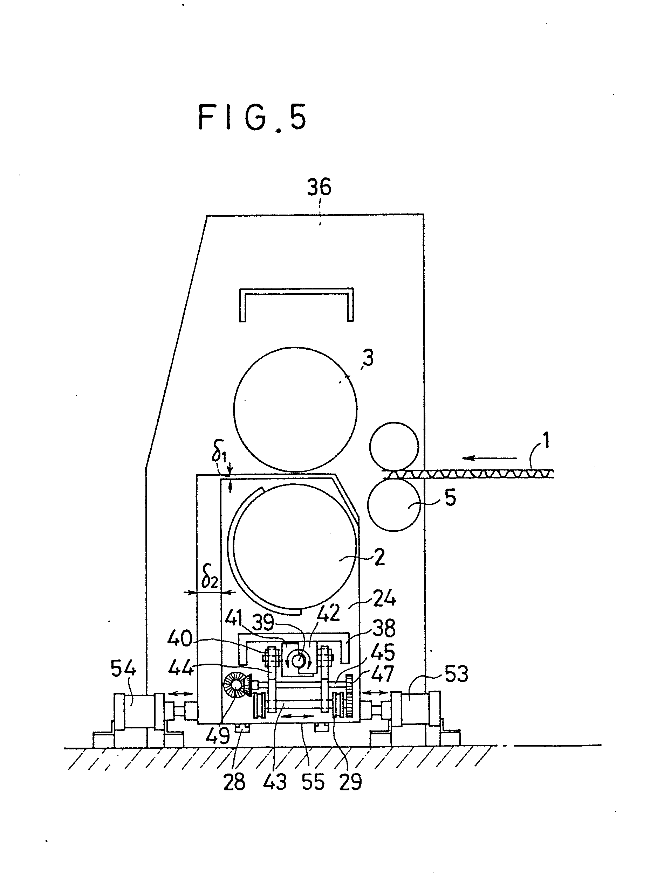

When order change is to be effected, a roll-out apparatus (which will be described later in more details with reference to Figs. 4 and 5) is actuated whereby the first movable frames 24 are self propelled on rails 28 with the aid of wheels 29 and they are then displaced to a position A by operating a driving unit 26. The first movable frames located at the position A are identified by reference numeral 24' in Fig. 3.

As will be apparent from Fig. 3, the second frames 25 with a die 4 for next order mounted thereon are previously disposed at a position B which is identified by reference numeral 31. When the next order change is to be effected, the second movable frames 25 are displaced from the position B by operating another driving unit 26 until they are placed on the rails 28. Thereafter, by actuating the roll-out apparatus they are caused to move toward the rotary die

6

cutter in the direction as represented by an arrow mark in the drawing and they enter into the interior of the machine. Thus, the required order change is completed.

In the meantime, the die mounted on the first movable frames 24' is replaced with another die to be used for next order and they are held at the waiting position B until the next order change is to be effected.

As will be best seen in Fig. 4, a first gear 32 is provided with a first sensor 34 and a second gear 33 is provided with a second sensor 35 so that a gear meshing mechanism is constituted thereby. Each of the first and second sensors 34 and 35 is equipped with a photoelectric switch, access switch or the like.

As will be apparent from the above description, the rotary die cutter of the invention has such significant features in comparison with the conventional rotary die cutter including a stationary die cut cylinder 2 that the die cut cylinder 2 is provided separately for the frames 24 and 25 each of which can be displaced outwardly of the frame structure of the machine, movable frames comprise first movable frames 24 and second movable frames 25 and the rotary die cutter is provided with a gear meshing mechanism.

Next, description will be made below with reference to Figs. 4 and 5 as to how the roll-out apparatus is

0236499

constructed.

A part of each of frame 36 (on the driven side) and frame 37 (on the driving side) is cut out in the window-shaped form. The first movable frame 24 is so designed that it enters into the cutout portion. Thus, in contrast with the conventional integral type frame the present invention provides a frame structure which is divided into two parts (see Fig. 5).

Both the driven side and the driving side of the first movable frame 24 are connected to one another by means of a stay 38 which horizontally extends in the lower area of the frame structure. The roll-out apparatus is fitted to the lower stay 38.

The roll-out apparatus is constructed in the following manner.

It includes a threaded shaft 39 which is provided with a right-handed screw and a left-handed screw and the threaded shaft 39 is rotatably supported by a plurality of bearings 42. Right-handed nut and left-handed nut 41 are threadably mounted on the screw shaft 39. Cam followers 40 are disposed on both the side faces of each of the screw nuts 41. Both the side faces of the nut 41 are spaced away from the screw shaft 39 by a certain distance.

The apparatus is provided with a plurality of wheel frames 44 each of which includes a wheel shaft 43 at the lower end thereof. Wheels 29 are mounted on the wheel shaft 43. The frame 44 is formed with a cutout at the upper end part thereof in which the cam follower 40 is fitted whereby the frame 44 can turn about a support shaft 45.

As is best seen in Fig. 4, the frames 44 are turnably supported on the fulcrum shaft 45. As the screw shaft 39 is rotated by activating a motor 46, both the right-handed nut and the left-handed nut 41 are displaced and thereby the wheel frames 44 are turned via the cam followers 40, causing the position of the wheels 29 to be displaced upwardly or downwardly (see Fig. 4).

On the other hand, the fulcrum shaft 45 for the driving wheel frames 44 and the wheel shaft 43 are operatively connected to one another via gears 47 and the fulcrum shaft 45 is fitted with a bevel gear 48 which meshes with a bevel gear on a bevel gear shaft 49. As the bevel gear shaft 49 is rotated by a motor 50, the wheels 29 are caused to rotate via a combination of the bevel gear 48 and the gears 47 whereby they move forward or backward on the rails 28. Thus, the roll-out apparatus is constructed in the above-described manner.

A plurality of first cylinders 53 and a plurality of second cylinders 54 are installed on both the sides of the frames 36 in order to assure that a gear (driving gear) 33 on the die cut cylinder 2 is engaged with or disengaged from a gear 52. Thus, a slide surface 55 can be slidably displaced in the lateral direction with the aid of slide plates by actuating these cylinders.

Incidentally, to achieve both vertical displacement and lateral displacement of the first movable frame 24, clearance $\delta_1$ and $\delta_2$ are provided for it.

As mentioned above, two sets of movable frames, that is, first and second movable frames 24 and 25 are provided for the rotary die cutter of the invention and each of the movable frames includes a die cut cylinder 2 and a second gear (cylinder driving gear) 33. Accordingly, when roll-out is effected, it is necessary that the position of the gear 33 and the gear 52 are predetermined correctly. In view of the necessity as mentioned above a datum point or reference point is placed on a first gear 32 for driving a printing cylinder which is located in the preceding step in the printing machine. The above-mentioned reference point is sensed by the first sensor 34. Similarly, the position of the second cylinder 33 on the die cut cylinder operatively connected to the first gear 32 on the printing cylinder vie a plurality of gears is sensed by the second sensor 35. Thus, the position where both the first gear 32 and the second gear 33 are located at the time of roll-out is correctly sensed with the aid of the sensors 34 and 35 whereby it is confirmed that they mesh with one another correctly at the time of order change.

Next, operation of the apparatus as constructed in the above-described manner will be described below.

When roll-out is to be effected due to a necessity for order change after completion of a certain production, the first movable frame 24 is shifted toward the opposite side where no paper feeding is effected (in the transverse direction) by actuating a plurality of first cylinders 53 until the second gear 33 is disengaged from the gear 52 and the first movable frame 24 assumes the roll-out position where (where the wheels 29 are located in vertical alignment with the rails 28). Thereafter, the screw shaft 39 is rotated by a motor 46 to turn the wheel frames 44 via the nuts 41, cam followers 40 and falcrum shafts 45 so that the wheels 29 are placed on the upper surface of the rails 28. By rotating the screw shaft 39 further, the first movable frame 24 is raised up by a predetermined height of $\alpha$ above a slide surface 55. Thus, the first movable frame 24 is ready to move along the rails 28.

Next, when the bevel gear 49 is rotated by a motor disposed on the left side of the frame structure as seen in the drawing, the wheels 29 are rotated via the bevel gears 48, fulcrum shafts 45 and gears 47, the first movable frame 49 is caused to move on the rails 28 to come out of the frame structure.

Next, as already described above with reference to Fig. 3 that is a system diagram, the second movable frame 25 on which a die 4 for the next order has been mounted rolls in to assume a predetermined position by way of the steps reverse to those in the case of roll-out. Then, the wheels 29 are raised up above the upper surface of the rails 28 and the second movable frame 25 slides on the slide surface 55 under the effect of thrust force given by the second cylinders 54 until both the gears 33 and 52 mesh with one another at the predetermined position. Thus, order change has been completed.

POSSIBILITY OF INDUSTRIAL UTILIZATION

As described above, the rotary die cutter of the invention is provided with plural sets of die cut cylinders and roll-out apparatuses and this leads to a result that die exchanging operation can be performed on another die cut cylinder which is located at the waiting position while one die cut cylinder is held in productive operation within the frame structure of the machine. Thus, time required for order change can be reduced remarkably. Further, during die exchanging any conventional anvil cylinder is not disposed above the die cut cylinder with the result that die exchanging can be easily effected within a short period of time. Due to the fact that die exchanging operation is performed in the area located outside the machine, it can be completed at a high operational efficiency accompanied by high safety.

CLAIMS

1. Rotary die cutter comprising a stationary frame structure of which part is cut out therefrom to form open spaces into which a movable frame is introduced to assume a predetermined operative position in the frame structure, an unit constituted by a combination of said movable frame and a die cut cylinder mounted thereon, a displacing mechanism for displacing said unit outwardly of the frame structure, said displacing mechanism being operatively associated with said movable frame, another unit constituted by a combination of another movable frame and another die cut cylinder mounted thereon, said another unit being disposed in an area located away from the frame structure, and a displacing mechanism for displacing the another unit to the predetermined operative position by way of the reverse steps to those of the first-mentioned unit after the latter is displaced to its waiting position.

2. A rotary die cutter as claimed in claim 1, wherein it is provided with a meshing mechanism for meshing a gear disposed on the stationary frame structure with a gear disposed on each of the movable frames.

3. A rotary die cutter as claimed in claims 1 and 2, wherein each of the movable frames is equipped with a roll-out apparatus.

0236499

# FIG.1

# FIG.2

# FIG.3

FIG.4

# FIG.5

# INTERNATIONAL SEARCH REPORT

0236499

International Application No. PCT/JP85/00505

## I. CLASSIFICATION OF SUBJECT MATTER (if several classification symbols apply, indicate all) [3]

According to International Patent Classification (IPC) or to both National Classification and IPC

Int. Cl$^4$   B26F 1/44

## II. FIELDS SEARCHED

| Minimum Documentation Searched [4] | |
|---|---|
| Classification System | Classification Symbols |
| IPC | B26F 1/38 - 1/44, B23D 35/00 |

| Documentation Searched other than Minimum Documentation to the Extent that such Documents are Included in the Fields Searched [5] | |
|---|---|
| Jitsuyo Shinan Koho | 1926 - 1985 |
| Kokai Jitsuyo Shinan Koho | 1971 - 1985 |

## III. DOCUMENTS CONSIDERED TO BE RELEVANT [14]

| Category [*] | Citation of Document, [16] with indication, where appropriate, of the relevant passages [17] | Relevant to Claim No. [18] |
|---|---|---|
| X | JP, B1, 49-18315 (Ishikawajima-Harima Heavy Industries Co., Ltd.), 9 May 1974 (09. 05. 74) (Family: none) | 1, 2, 3 |
| X | JP, Y2, 54-1092 (Ishikawajima-Harima Heavy Industries Co., Ltd.), 19 January 1979 (19. 01. 79) (Family: none) | 1, 2, 3 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| November 25, 1985 (25.11.85) | December 9, 1985 (09.12.85) |
| International Searching Authority [1] | Signature of Authorized Officer [20] |
| Japanese Patent Office | |